Europäisches Patentamt

European Patent Office

Office européen des brevets

(19)

(11) Veröffentlichungsnummer: **0 331 866**
**A2**

(12) **EUROPÄISCHE PATENTANMELDUNG**

(21) Anmeldenummer: 89100256.0

(22) Anmeldetag: 09.01.89

(51) Int. Cl.⁴: **B23B 31/12**

(30) Priorität: 11.03.88 DE 3808156

(43) Veröffentlichungstag der Anmeldung:
**13.09.89 Patentblatt 89/37**

(84) Benannte Vertragsstaaten:
**ES FR GB IT**

(71) Anmelder: **Röhm, Günter Horst**
**Heinrich-Röhm-Strasse 50**
**D-7927 Sontheim(DE)**

(72) Erfinder: **Röhm, Günter Horst**
**Heinrich-Röhm-Strasse 50**
**D-7927 Sontheim(DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau(DE)**

(54) **Zum Anschluss an eine Bohrspindel eingerichtetes Bohrfutter.**

(57) Im Futterkörper (1) sind die Spannbacken (3) symmetrisch um die Drehachse (4) in Führungsbohrungen (5) angeordnet. Ein Spannring (2) ist drehbar und axial unverschiebbar am Futterkörper (1) gelagert und zum Verstellen der Spannbacken (3) mit einem konischen Spanngewinde (7) versehen, das an jeder Spannbacke (3) mit einer Zahnreihe (8) im Eingriff steht. Die Führungsbohrungen (5) treten in Fenstern (6) an der Mantelfläche des Futterkörpers (1) aus. Im Bereich dieser Fenster (6) ist der Spannring (2) mit einem ungeteilten einstückigen Gewindering (2.2) versehen, an dem das Spanngewinde (7) ausgebildet ist. Der Futterkörper (1) ist im Bereich zwischen dem Gewindering (2.2) und dem bohrspindelseitigen Ende (9) des Futterkörpers (1) im Außendurchmesser überall höchstens gleich dem Innendurchmesser des Gewinderinges (2.2), so daß der Spannring (2) axial vom Ende (9) her über den Futterkörper (1) geschoben und mit Sicherungsgliedern (14) am Futterkörper gesichert werden kann.

Fig. 1

## Zum Anschluß an eine Bohrspindel eingerichtetes Bohrfutter.

Die Erfindung betrifft ein zum Anschluß an eine Bohrspindel eingerichtetes Bohrfutter mit zwischen sich eine Aufnahme für das Bohrwerkzeug bildenden Spannbacken, mit einem Futterkörper, in dem die Spannbacken symmetrisch um die Drehachse in Führungsbohrungen angeordnet sind, die in zur Drehachse geneigter Richtung verlaufen, und mit einem koaxial zur Drehachse am Futterkörper angeordneten Spannring, der drehbar und axial unverschiebbar am Futterkörper gelagert ist und zum Verstellen der Spannbacken in deren Führungsrichtung ein mit der Drehachse koaxiales Spanngewinde aufweist, das an jeder Spannbacke mit einer an der Spannbacke vorgesehenen Zahnreihe im Eingriff steht.

Bohrfutter dieser Art sind beispielsweise aus DE 34 16 986 C2 bekannt. Die Spannung des Bohrwerkzeugs erfolgt mit Hilfe eines am Futterkörper ansetzbaren Spannschlüssels, der ein Zahnritzel aufweist, das in einen am Spannring vorgesehenen Zahnkranz eingreift. Mit Hilfe dieses Spannschlüssels kann über den Zahnkranz der Spannring zum Schließen oder Öffnen des Bohrfutters verdreht werden. Der Spannring besteht aus einer Spannhülse und einem umfangsmäßig hälftig geteilten Gewindering, an dem sich das Spanngewinde und der Zahnkranz befinden. Die beiden von der Spannhülse zusammengehaltenen Hälften des Gewinderings sind in einer Ringnut des Futterkörpers geführt, welche die Führungsbohrungen für die Spannbacken anschneidet, so daß dort das Spanngewinde in die Zahnreihen der Spannbacken eingreifen kann.

Die geteilte Ausbildung des Gewinderings ist aufwendig. Beide Ringhälften müssen gehärtet werden und sind umständlich zu montieren. Führung und Rundlauf des Gewinderings und damit auch die Spanngenauigkeit der Spannbacken lassen zu wünschen übrig, wenn die beiden Spannringhälften nicht sehr genau gearbeitet und zusammengefügt sind.

Der Erfindung liegt die Aufgabe zugrunde, ein Bohrfutter der eingangs genannten Art bezüglich seiner Herstellung und Montage zu vereinfachen, ohne daß die Spanngenauigkeit leidet.

Diese Aufgabe wird nach der Erfindung dadurch gelöst, daß die Führungsbohrungen in Fenstern an der Mantelfläche des Futterkörpers austreten, daß im Bereich dieser Fenster der Spannring einen ungeteilten einstückigen Gewindering besitzt, an dem das Spanngewinde ausgebildet ist, daß der Futterkörper im Bereich zwischen dem Gewindering und dem bohrspindelseitigen Ende des Futterkörpers im Außendurchmesser überall höchstens gleich dem Innendurchmesser des Gewinderings ist, und daß der Spannring am Futterkörper in Zylinderflächen geführt ist, in denen sich den Spannring gegen Axialverschiebungen im Futterkörper sperrende Sicherungsglieder befinden. Vorzugsweise ist der Gewindering einstückig an dem im übrigen eine den Futterkörper umschließende Spannhülse bildenden Spannring ausgebildet. Der Spannring ist dann ein einziges, aus Spannhülse und Gewindering bestehendes Teil, das durch einen einzigen Drehvorgang hergestellt werden kann. Durch die Erfindung wird erreicht, daß die hälftige Teilung des Gewinderings entfällt, der Gewindering also in sich einteilig und auch mit dem Spannring einstückig hergestellt werden kann und keiner Härtung mehr bedarf. Zur Montage am Futterkörper wird der Spannring mit dem Gewindering vom bohrspindelseitigen Ende her axial über den Futterkörper geschoben und braucht dann nur noch auf dem Futterkörper mittels der Sicherungsglieder gegen Axialverschiebungen blockiert zu werden. Im Ergebnis kann der Gewindering einfach und trotzdem sehr genau hergestellt und leicht und schnell am Futterkörper montiert werden. Durch die Einteiligkeit des Gewinderings und seine gute Führung am Futterkörper wird trotzdem eine hohe Spanngenauigkeit der Spannbacken bei guten Rundlaufeigenschaften erzielt.

Im einzelnen besteht die Möglichkeit, daß in der Zylinderfläche am Spannring und am Futterkörper einander radial gegenüber liegende Ringnuten vorgesehen sind, die sich gegenseitig zu einem Ringkanal ergänzen, in dem die Sicherungsglieder angeordnet sind. Zweckmäßig befindet sich eine der Zylinderflächen im Bereich des bohrspindelseitigen Endes des Futterkörpers, so daß der Abstand zwischen der Zylinderfläche und dem Spanngewinde zum Vorteil einer guten Führung des Spannrings möglichst groß ist. Die Führungs- und Rundlaufverhältnisse des Spannringes können noch dadurch weiter verbessert werden, daß der Gewindering bohrerseitig axial vor dem Spanngewinde eine weitere zylindrische Innenfläche aufweist, mit der er an einer entsprechenden Außenfläche des Futterkörpers geführt ist. Die Sicherung des Spannrings am Futterkörper kann auf verschiedene Weise erfolgen. Vorzugsweise empfiehlt es sich, daß der Ringkanal und die Sicherungsglieder ein Kugellager bilden, wozu der Ringkanal als Lagerkanal ausgebildet ist, in dem die Sicherungsglieder in Form von Lagerkugeln umlaufen, und daß in der Wand des Spannrings eine verschließbare Füllöffnung vorgesehen ist, die im Ringkanal mündet und durch die hindurch die Lagerkugeln in den Ringkanal einführbar sind.

Nach einem weiteren Vorschlag der Erfindung ist der Spannring, so lange er sich am Futterkörper in einem gegen Axialverschiebungen noch ungesicherten Zustand befindet, für Montagezwecke über seine Lage im gesicherten Zustand hinaus axial zum Bohrer hin vorschiebbar, bis sich das Spanngewinde außer Eingriff mit den Zahnreihen der Spannbacken befindet. Dadurch wird die Montage des ungeteilten Spannrings wesentlich erleichtert und beschleunigt. Bei vorgeschobenem Spannring können die Spannbacken von vorn her in den Futterkörper eingesetzt werden. Wird anschließend der Spannring in seine endgültige Lage zurückgezogen, beginnt sein Spanngewinde an den Spannbacken zu greifen, wodurch die Spannbacken vom Spannring automatisch mit in ihre endgültige und am Spannring voll im Eingriff stehende Position gezogen werden.

Das erfindungsgemäße Bohrfutter kann als übliches Zahnkranzfutter zur Schlüsselspannung ausgebildet und dazu am Futterkörper mit einer drehschlüssigen Aufnahme zum Anschluß der Bohrspindel eingerichtet sein. Es besteht aber auch die Möglichkeit, dem Bohrfutter selbst- und nachspannende Eigenschaften zu verleihen, so daß es ohne Spannschlüssel von Hand gespannt werden und sich im Bohrbetrieb selbsttätig nachspannen kann. Dazu ist nach der Erfindung vorgesehen, daß der Spannring das von den Spannbacken abgewandte Ende des Futterkörpers zur Bohrspindel hin übergreift und mit einer Aufnahme zum drehschlüssigen Anschluß der Bohrspindel versehen ist und daß - gesehen in Richtung von der Bohrspindel zu den Spannbacken - das Spanngewinde einen Drehsinn besitzt, durch den sich bei Rechtslauf des Spannrings auf dem Futterkörper die Spannbacken im Sinne eines Spannens des Bohrwerkzeugs verstellen. Dadurch wird erreicht, daß das Drehmoment der Bohrspindel vom Spannring über das Spanngewinde auf den Futterkörper und über die in ihm geführten Spannbacken auf das Bohrwerkzeug übertragen wird, das Drehmoment also den Spannring und das Spanngewinde im Sinne eines Spannens des Bohrwerkzeugs beaufschlagt. Das Reaktionsmoment des Bohrwerkzeugs führt daher zur selbsttätigen Nachspannung des Bohrers.

Im folgenden wird die Erfindung an in der Zeichnung dargestellten Ausführungsbeispielen näher erläutert; es zeigen:

Fig. 1 einen Axialschnitt durch ein mit einem Spannschlüssel zu betätigendes Bohrfutter,

Fig. 2 ein Bohrfutter entsprechend Fig. 1 in einer abgewandelten Ausführungsform

Fig. 3 einen Axialschnitt durch ein selbst- bzw. nachspannendes Bohrfutter.

In der Zeichnung ist der Futterkörper mit 1 und der Spannring mit 2 bezeichnet. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die Spannbacken 3 sind symmetrisch um die Drehachse 4 des Bohrfutters im Futterkörper 1 in Führungsbohrungen 5 angeordnet, die in zur Drehachse 4 geneigter Richtung verlaufen, so daß die Achsen der Führungsbohrungen 5 nach vorn, d. h. zum Bohrwerkzeug hin, zusammenlaufen. Der Spannring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsbohrungen 5 mit einem mit der Drehachse 4 koaxialen Spanngewinde 7 versehen. Dieses Spanngewinde 7 ist entsprechend der Neigung der Spannbacken 3 gegen die Drehachse 4 konisch ausgebildet und steht an jeder Spannbacke 3 mit einer an der Spannbacke vorgesehenen Zahnreihe 8 im Eingriff, so daß eine Drehung des Spannrings 2 ein Verschieben der Spannbacken 3 in den Führungsbohrungen 5 ergibt. Die Spannbacken 3 sind im wesentlichen kreiszylindrische Bolzen, die auf der dem Spanngewinde 7 zugewandten Seite abgeflacht und dort mit der Zahnreihe 8 ausgestattet sind.

Die Führungsbohrungen 5 treten in Fenstern 6 an der Mantelfläche des Futterkörpers 1 aus. Im Bereich dieser Fenster 6 besitzt der Spannring 2 einen ungeteilten einstückigen Gewindering 2.2, an dem das Spanngewinde 7 ausgebildet ist. Der Futterkörper 1 ist im Bereich zwischen dem Gewindering 2.2 und dem bohrspindelseitigen Ende 9 des Futterkörpers 1 im Außendurchmesser überall höchstens gleich dem Innendurchmesser des Gewinderings 2.2, so daß der Spannring 2 mit dem Gewindering 2.2 vom bohrspindelseitigen Ende 9 her axial über den Futterkörper 1 geschoben werden kann, bis sich das Spanngewinde 7 im Bereich der Fenster 6 befindet und dort mit den Zahnreihen 8 der Spannbacken 3 in Eingriff gelangen kann. Im übrigen ist der Spannring 2 am Futterkörper 1 in Zylinderflächen 12, 13 geführt, in denen sich den Spannring 2 gegen Axialverschiebungen am Futterkörper 1 sperrende Sicherungsglieder 14, 15 befinden.

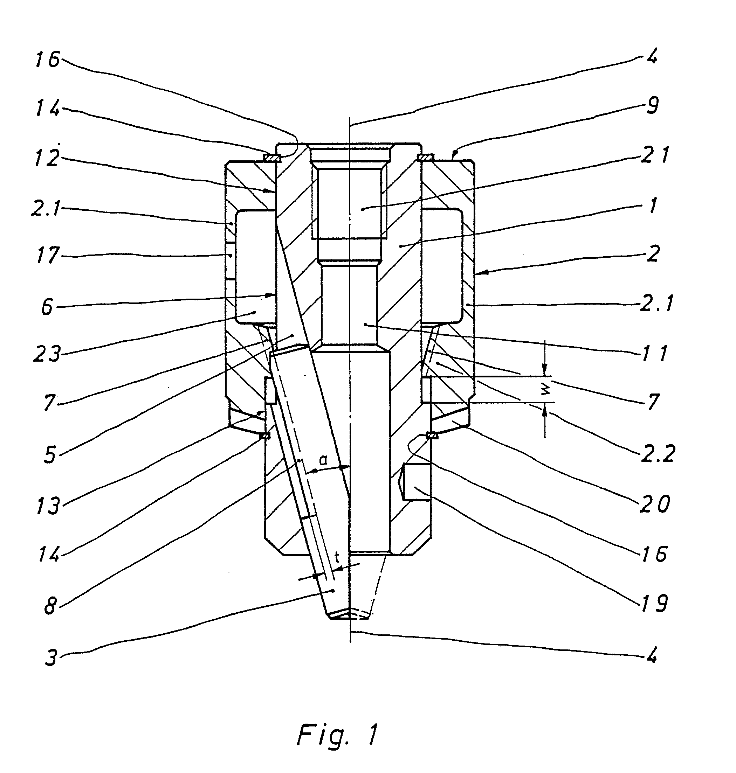

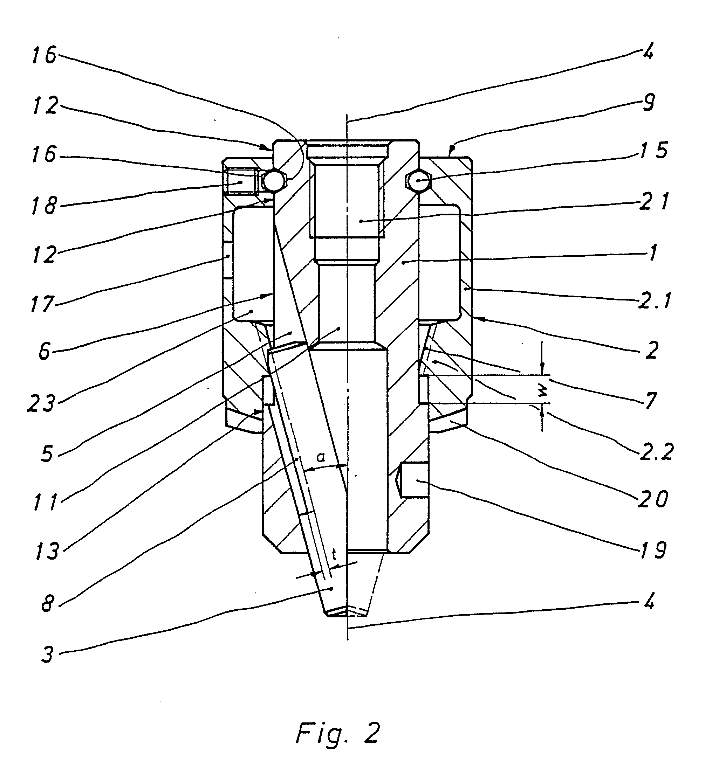

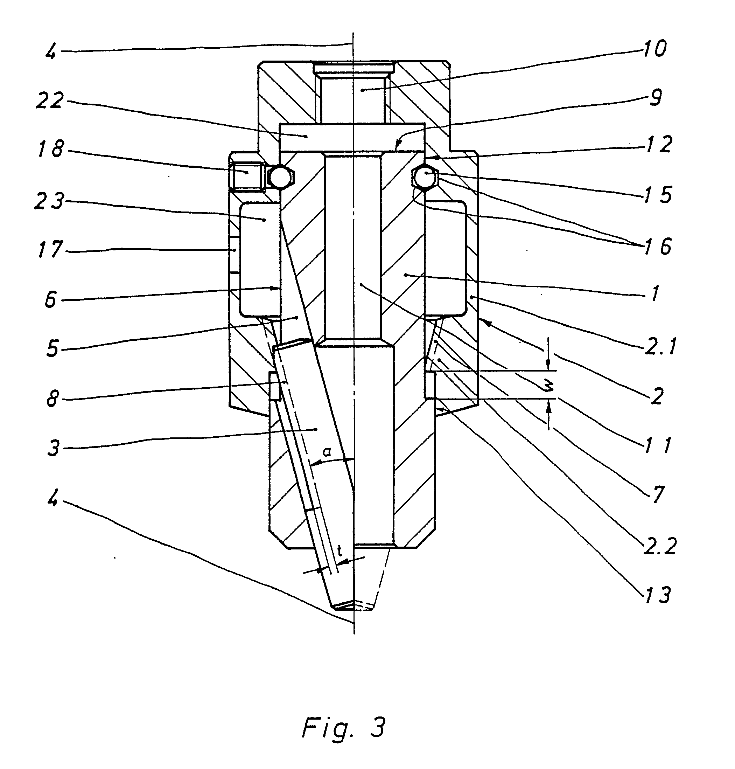

Im einzelnen ist der Gewindering 2.2 einstückig an dem im übrigen eine den Futterkörper 1 umschließende Spannhülse 2.1 bildenden Spannring 2 ausgebildet. In den Zylinderflächen 12, 13 sind am Spannring 2 und/oder am Futterkörper 1 einander radial gegenüber liegende Ringnuten 16 vorgesehen, die sich gegenseitig zu einem Ringkanal ergänzen können, in dem die Sicherungsglieder 15, 16 angeordnet sind. In Fig. 2 und 3 bilden der Ringkanal und die Sicherungsglieder ein Kugellager, wozu der Ringkanal als Lagerkanal ausgebildet ist, in dem die Sicherungsglieder 15 in Form von Lagerkugeln umlaufen. In der Wand des Spannrings 2 befindet sich eine verschließbare Füllöffnung 18, die im Ringkanal mündet und durch die hindurch die Lagerkugeln in den Ringkanal eingebracht werden können. In Fig. 1 sind die Sicherungsglieder 14 radial auffedernde, in den Ringnuten 16 liegende Sicherungsringe.

Die Zylinderfläche 12 ist im Bereich des bohrspindelseitigen Endes 19 des Futterkörpers 1 vorgesehen. Außerdem ist der Gewindering 2.2 vorzugsweise bohrerseitig axial vor dem Spanngewinde 7 mit einer weiteren zylindrischen Innenfläche 13 versehen, mit der er an einer entsprechenden Außenfläche des Futterkörpers 1 geführt ist. Zwischen dieser zylindrischen Innenfläche 13 und der Zylinderfläche 12 befindet sich ein axial vergleichsweise großer Abstand, der gute Führungsverhältnisse des Spannrings 2 am Futterkörper 1 zur Folge hat.

So lange der Spannring 2 sich am Futterkörper 1 noch in einem gegen Axialverschiebungen ungesicherten Zustand befindet, die Lagerkugeln also beispielsweise noch nicht in den Lagerkanal eingefüllt sind, kann der Spannring 2 für Montagezwecke über seine in der Zeichnung im gesicherten Zustand dargestellte Lage hinaus axial nach vorn zum Bohrwerkzeug hin so weit verschoben werden, daß das Spanngewinde 7 außer Eingriff an den Zahnreihen 8 der Spannbacken 3 gelangt. Ist t die Eingriffstiefe des Spanngewindes 7 an den Zahnreihen 8 und a der Neigungswinkel zwischen den Achsen der Führungsbohrungen 5 für die Spannbacken 3 und der Drehachse 4, so ist der axiale Verschiebungsweg w bis zur Aufhebung des Eingriffs zwischen dem Spannring und den Spannbacken 3 gegeben durch

$w = t \sin a$.

Um die Länge dieses Wegen w muß also in der Zeichnung der Spannring 2 axial nach vorn verschiebbar sein, um die beschriebene Montagevereinfachung zu ermöglichen. Wird nämlich der Spannring 2 um w nach vorn verschoben, bewegen sich der Gewindering 2.2 einerseits und die Spannbacken 3 andererseits relativ zueinander um den Weg t senkrecht zur Achse 6 der Führungsbohrungen 5 auseinander, wodurch der Gewindeeingriff zwischen dem Spannring und den Spannbacken aufgehoben wird.

Die Fig. 1 und 2 zeigen das Bohrfutter in Ausführungsformen als übliche Zahnkranzfutter, bei denen der Spannring 2 mittels eines in der Zeichnung nicht dargestellten Spannschlüssels betätigbar ist, der mit einem Führungszapfen in eine Bohrung 19 des Futterkörpers eingesetzt werden kann und dann mit einem Zahnritzel in einen Zahnkranz 20 des Gewinderinges 2.2 greift. Durch Drehen des Spannschlüssels wird der Gewindering 2.2 im Sinne eines Öffnens oder Schließens des Bohrfutters gedreht. Bei dieser Ausführungsform erfolgt der Anschluß der Bohrspindel unmittelbar am Futterkörper 1, der zu diesem Zweck mit einer Gewindeaufnahme 21 versehen ist.

Im Ausführungsbeispiel nach Fig. 3 dagegen besitzt das Bohrfutter selbst- bzw. nachspannende Eigenschaften. Dazu ist die Aufnahme 10 zum drehschlüssigen Anschluß der Bohrspindel am Spannring 2 vorgesehen, der dazu das von den Spannbacken 3 abgewandte Ende 9 des Futterkörpers 1 zur nicht dargestellten Bohrspindel hin übergreift und zum Ende 9 hin zwischen sich und dem Futterkörper 1 einen Leerraum 22 bildet, dessen axiale Höhe mindestens gleich w ist, so daß das Verschieben des Spannrings 2 zu Montagezwecken nicht behindert wird. Das Spanngewinde 7 besitzt umgekehrten Drehsinn als beim Ausführungsbeispiel der Fig. 1 und 2. Der Drehsinn in Fig. 3 3 muß nämlich so sein, daß - gesehen in Richtung von der Bohrspindel zu den Spannbacken hin, - das Spanngewinde 7 bei Rechtslauf des Spannrings 2 auf dem Futterkörper 1 die Spannbacken 3 im Sinne eines Spannens des Bohrwerkzeugs verstellt. Dann versucht beim Bohren das Reaktionsmoment des Bohrwerkzeugs die Spannbacken 3 und mit ihnen den Futterkörper 1 entgegen dem Antriebsmoment der Bohrspindel aufzuhalten. Dieses Reaktionsmoment wird daher im Spanngewinde 7 zwischen den Spannbacken 3 einerseits und dem Spannring 2 andererseits voll im Sinne einer selbsttätigen Nachspannung wirksam.

Außerdem ist in allen Ausführungsformen der Futterkörper 1 in fluchtender Verlängerung der Aufnahme 10 mit einem Durchbruch 11 ausgestattet, durch den hindurch im Falle eines Betriebs des Bohrfutters an einem Bohrhammer die Schlagwirkung des Döppers unmittelbar auf das zwischen den Spannbacken 3 geführte Bohrwerkzeug übertragen werden kann. Durch Öffnungen 17 in der Wand des Spannrings 2 kann Bohrstaub ins Freie austreten, der aus den Führungsbohrungen 5 in eine dazu zwischen Spannring 2 und Futterkörper 1 vorgesehene Ringkammer 23 gelangt ist.

## Ansprüche

1. Zum Anschluß an eine Bohrspindel eingerichtetes Bohrfutter mit zwischen sich eine Aufnahme für das Bohrwerkzeug bildenden Spannbacken (3), mit einem Futterkörper (1), in dem die Spannbacken (3) symmetrisch um die Drehachse (4) in Führungsbohrungen (5) angeordnet sind, die in zur Drehachse (4) geneigter Richtung verlaufen, und mit einem koaxial zur Drehachse (4) am Futterkörper (1) angeordneten Spannring (2), der drehbar und axial unverschiebbar am Futterkörper (1) gelagert ist und zum Verstellen der Spannbacken (3) in deren Führungsrichtung ein mit der Drehachse (4) koaxiales Spanngewinde (7) aufweist, das an jeder Spannbacke (3) mit einer an der Spannbacke (3) vorgesehenen Zahnreihe (8) im Eingriff steht, dadurch gekennzeichnet, daß die Führungsbohrungen (5) in Fenstern (6) an der Mantelfläche des Futterkörpers (1) austreten, daß im Bereich dieser Fenster (6) der Spannring (2) einen ungeteilten einstückigen Gewindering (2.2) besitzt, an dem das Spanngewinde (7) ausgebildet ist, daß der Futterkörper (1) im Bereich zwischen dem Gewindering (2.2) und dem bohrspindelseitigen Ende (9) des Futterkörpers (1) im Außendurchmesser überall höchstens gleich dem Innendurchmesser des Gewinderinges (2.2) ist, und daß der Spannring (2) am Futterkörper (1) in Zylinderflächen (12, 13) geführt ist, in denen sich den Spannring (2) gegen Axialverschiebungen am Futterkörper (1) sperrende Sicherungsglieder (14, 15) befinden.

2. Bohrfutter nach Anspruch 1, dadurch gekennzeichnet, daß der Gewindering (2.2) einstückig an dem im übrigen eine den Futterkörper (1) umschließende Spannhülse (2.1) bildenden Spannring ausgebildet ist.

3. Bohrfutter nach Anspruch 1 oder 2, dadurch gekennzeichnet, daß in der Zylinderfläche (12) am Spannring (2) und/oder am Futterkörper (1) einander radial gegenüber liegende Ringnuten (16) vorgesehen sind, die sich gegenseitig zu einem Ringkanal ergänzen, in dem die Sicherungsglieder (14, 15) angeordnet sind.

4. Bohrfutter nach einem der Ansprüche 1 bis 3, dadurch gekennzeichnet, daß eine der Zylinderflächen (12) im Bereich des bohrspindelseitigen Endes (9) des Futterkörpers (1) vorgesehen ist.

5. Bohrfutter nach Anspruch 3 oder 4, dadurch gekennzeichnet, daß der Ringkanal und die Sicherungsglieder (15) ein Kugellager bilden, wozu der Ringkanal als Lagerkanal ausgebildet ist, in dem die Sicherungsglieder (15) in Form von Lagerkugeln umlaufen, und daß in der Wand des Spannrings (2) eine verschließbare Füllöffnung (18) vorgesehen ist, die im Ringkanal mündet und durch die hindurch die Lagerkugeln in den Ringkanal einführbar sind.

6. Bohrfutter nach einem der Ansprüche 1 bis 5, dadurch gekennzeichnet, daß der Gewindering (2.2) bohrerseitig axial vor dem Spanngewinde (7) eine weitere zylindrische Innenfläche (13) aufweist, mit der er an einer entsprechenden Außenfläche des Futterkörpers (1) geführt ist.

7. Bohrfutter nach einem der Ansprüche 1 bis 6, dadurch gekennzeichnet, daß der Spannring (2), so lange er sich am Futterkörper (1) in einem gegen Axialverschiebungen ungesicherten Zustand befindet, für Montagezwecke über seine Lage im gesicherten Zustand hinaus axial zum Bohrer hin vorschiebbar ist, bis sich das Spanngewinde (7) außer Eingriff mit den Zahnreihen (8) der Spannbacken (3) befindet.

8. Bohrfutter nach einem der Ansprüche 1 bis 7, dadurch gekennzeichnet, daß der Spannring (2) das von den Spannbacken (3) abgewandte Ende (9) des Futterkörpers (1) zur Bohrspindel hin übergreift und mit einer Aufnahme (10) zum drehschlüssigen Anschluß der Bohrspindel versehen ist und daß - gesehen in Richtung von der Bohrspindel zu den Spannbacken - das Spanngewinde (7) einen Drehsinn besitzt, durch den sich bei Rechtslauf des Spannrings (2) auf dem Futterkörper (1) die Spannbacken (3) im Sinne eines Spannens des Bohrwerkzeugs verstellen.

Fig. 1

Günter Horst Röhm

Fig. 2

Günter Horst Röhm

Fig. 3

Günter Horst Röhm